# EUROPEAN PATENT SPECIFICATION

(11) **EP 1 738 899 B1**
(45) Date of publication and mention of the grant of the patent: **09.09.2009**
(21) Application number: 06007568.6
(22) Date of filing: 11.04.2006
(51) Int. Cl.: B32B 37/02, B32B 37/12, B32B 37/20

(54) **Machine for bonding films made of different materials, in multiple layers and the corresponding method**
Vorrichtung und Verfahren zum Verbinden mehrerer Schichten aus unterschiedlichen Materialien
Appareil et méthode pour laminer plusieurs couches de matériaux differents

(30) Priority: 30.06.2005 IT PC20050038
(43) Date of publication of application: 03.01.2007
(73) Proprietor: NORDMECCANICA S.p.A., 29100 Piacenza (IT)
(72) Inventor: Cerciello, Antonio, 29100 Piacenza (PC) (IT)
(74) Representative: Fisauli, Beatrice A. M.

(56) References cited:
- EP-A- 0 546 792
- EP-A2- 0 324 892
- US-A1- 2004 197 504

## Description

This invention relates to a machine designed to bond a number of layers of film made of different materials, using solventless adhesive, to obtain a single multiply film consisting of a series of layers having different characteristics.

The machine according to the invention is highly flexible, because it can be set up not only to produce a single film consisting of different layers, but also to make two films each consisting of two layers bonded to one another, or a three-ply film wherein the films can be made of different materials, such as plastic or paper; one of the films could even be made of aluminium foil.

The machine according to the invention comprises an ordinary drum associated with a plurality of spreader/applicator units, each of which comprises a tank of adhesive and means for taking up said adhesive and transferring it in the form of a thin layer to an applicator roller which moves in contact with the drum.

Each of the films to be bonded is fed to one of the zones formed between the drum and said spreader/applicator units, where it receives a layer of adhesive and is then joined to the film fed to the next zone.

The machine according to the invention is highly advantageous, because as well as allowing different films to be bonded, it is very compact, being far smaller than conventional installations which, in order to bond several layers, require the same number of coupling machines connected in series as the number of layers.

Bonding machines are already known which bond two films while said films advance, possibly at high speed, using solventless adhesive.

One such bonding machine is described in European patent no. 0 324 892 filed by the same applicant.

Said machines comprise a pay-out unit that pays out film from a reel, a spreader/applicator unit that spreads a small amount of adhesive (1-2 g per m²) onto the surface of the film while it advances, a second pay-out unit that pays out from a second reel a film destined to be bonded to the previous film, and a rereeler that rereels the film obtained.

The need for improved productivity has led to the development of machines wherein the films move at very high speed (up to 6 metres per second and more), which gives some idea of the difficulty involved, especially as the adhesive, whose characteristics are strongly influenced by environmental conditions, must be spread very precisely and evenly over the entire surface of the film, in a layer a few microns thick.

Bonded materials consisting of multiple layers of film are in demand in various industries. For example, in the packing and food industries, films are required which may comprise a layer of material that can come into contact with foodstuffs, a second layer that is impermeable to liquids or gases, a third layer that provides sufficient strength, and other layers which may consist, for example, of printable material, heat-sealable material and the like.

EP-A-0546792 describes a method and machine for producing a flexible multi-layer film useful as a packaging material.

The machine comprises means for feeding a series of films to be bonded, spreader units 64, 65 which can be operated separately from one the other, which apply a layer of adesive to a film, drying ovens 71, 72, and an attachment station 57 consisting of a pair of pressure rollers 75, 76 which press the films one against the other to obtain a three layer film.

Units consisting of a series of in-line bonding machines are generally used to manufacture these films.

Two films are bonded in a first unit, then conveyed to the second unit where they are bonded to a third film, and so on, until a final film consisting of four or more layers is obtained.

This solution is obviously not only cumbersome, but also extremely expensive in terms of both the initial investment and the maintenance and running costs, especially as each of these machines can be up to 10-15 metres long and require several thousand Kw to run.

The present invention, which falls into this sector, relates to a machine designed to bond multiple films (in the specific case illustrated, designed to bond four films, or Quadruplex), which is very compact and absorbs much less energy than traditional units.

Moreover, the machine according to the invention is extremely flexible because it can easily be configured to bond three films, one of which is made of aluminium, or to output two bonded film , each consisting of two layers.

These and other characteristics will appear more clearly from the detailed description set out below, provided by way of example but not of limitation, by reference to the annexed figures wherein:
- figure 1 is the side view of a machine according to the invention;
- figure 2 illustrates, again in side view, a removable spreader/applicator unit in the machine according to the invention;
- figures 3 to 5 are schematic representations of the machine according to the invention, which illustrate the different methods of configuration and use of the machine in the various operating modes.

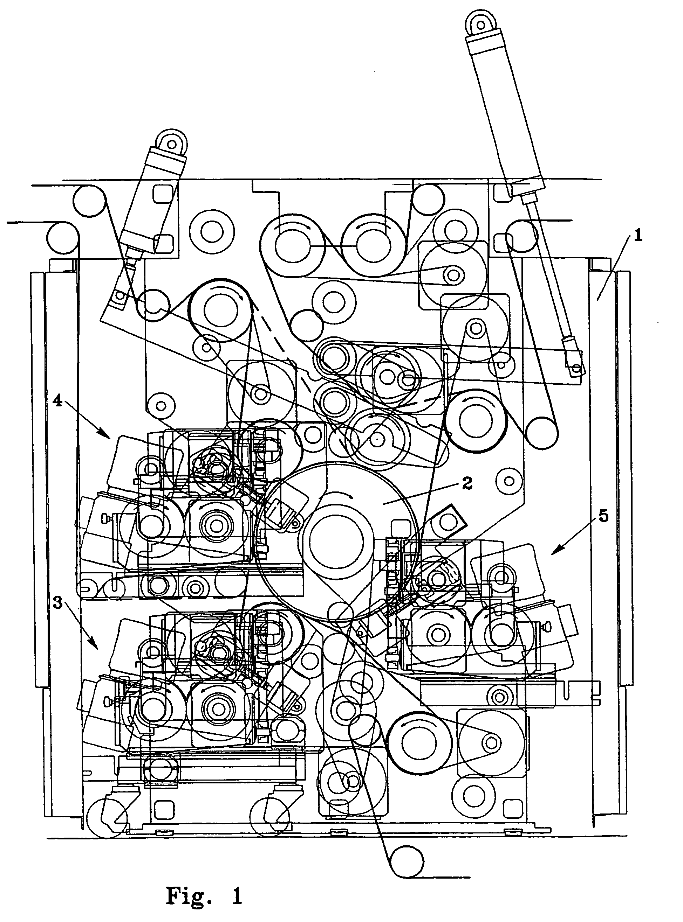

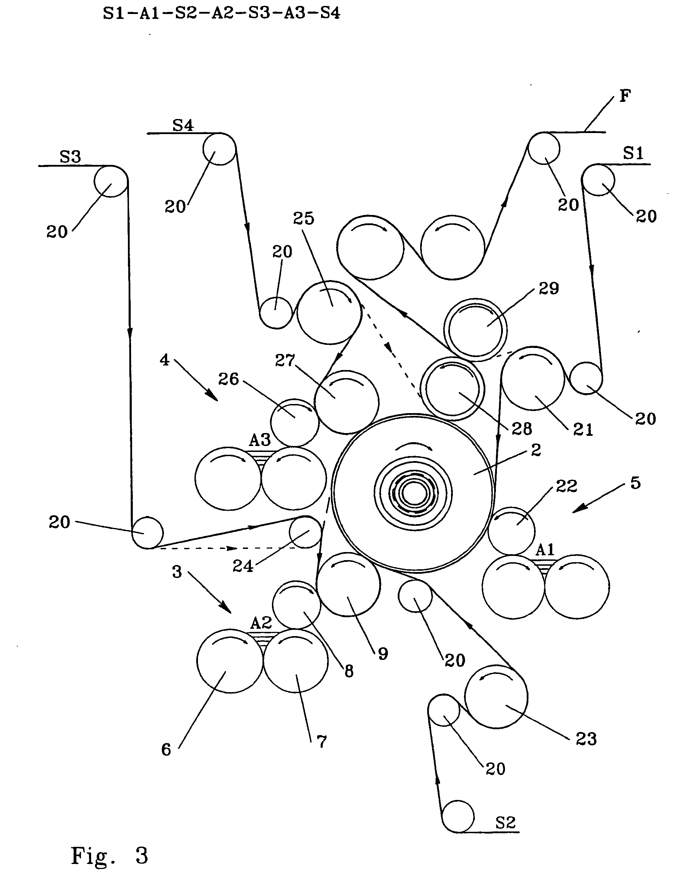

As shown in figure 1, the machine according to the invention comprises, mounted on a pair of abutments 1, a central drum 2 associated with a plurality of spreader/applicator units indicated as 3, 4 and 5, together with various sets of guide rollers to feed the film to be bonded, which will be described in greater detail below by reference to figures 3 to 5.

Unit 3 is mounted on a carriage C which enables it to be removed easily from the machine and replaced with another apparatus, such as a pay-out unit designed to feed aluminium ribbon from a reel.

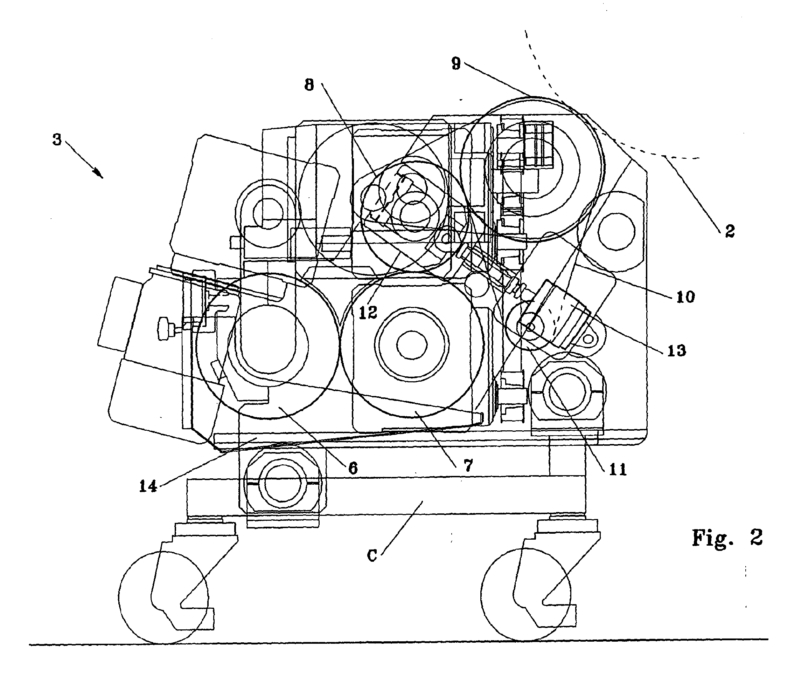

As shown in figure 2, spreader/applicator unit 3 comprises a pair of rollers 6 and 7 mounted on a carriage C and in contact with one another. A seating formed between said units constitutes the tank that contains the adhesive to be spread on the films.

The mutual position of rollers 6 and 7 is adjustable with devices of known type, so as to leave a clearance of adjustable thickness, namely a few tenths of a millimetre, between the two rollers, so that when at least one of said rollers is rotated it takes up a thin layer of adhesive, the thickness of which depends on the distance between the rollers. Said adhesive is then transferred to a third or intermediate roller 8, which rotates around its axis at a speed greater than that of roller 7.

The thickness of the layer of adhesive transferred to roller 8 is therefore reduced.

Downstream of intermediate roller 8 there is a third or applicator roller 9 driven via a belt 10 by a motor 11 which causes it to rotate at a speed greater than that of roller 8, so that the layer of adhesive previously transferred from roller 7 to roller 8 is transferred to roller 9, further reducing its thickness.

Roller 9 then transfers the adhesive to the film, as will be described more particularly below.

Roller 8 is mounted on supports that slide along guides 12, and is subject to the action of a piston 13 which keeps it in contact with rollers 7 and 9.

Said spreader unit is already known in itself, and corresponds substantially to the spreader unit described in the above-mentioned European patent 0 324 892.

The whole of unit 3 also slides in relation to carriage 4, moving on guides 14, to enable applicator roller 9 to move slightly away from drum 2.

The second spreader/applicator unit 4 is the same as the preceding one, except that instead of being mounted on a removable carriage it is fitted directly to the abutments of the machine, in such a way as to allow small movements, again to enable applicator roller 9 to move away from drum 2.

The third spreader/applicator unit 5 is also the same as the preceding one, but without applicator roller 9, with the result that intermediate roller 8 comes into contact with drum 2 in this case.

Finally, a pair of presser rollers 28 and 29, located immediately upstream of the bonded film pick-up area, exert pressure on the bonded film to ensure thorough, complete adherence.

As will be seen from the examples given below, with the machine described above it is possible to obtain a four-ply or three-ply film, or two two-ply films, or a three-ply film wherein one layer is constituted by aluminium, with the possibility of applying adhesive to either or both sides of the film.

The method according to the invention will also become clear from the examples.

### Example 1 ― Production of four-ply film (figure 3)

In Figure 3 and the figures that follow, the layers or films which will form the final film are indicated as S1, S2, S3 and S4, while the adhesives are indicated as A1, A2 and A3.

Figure 3 refers to the case in which the machine is configured to produce a four-ply film arranged as follows: S1 - A1 - S2 - A2 - S3 - A3 - S4.

The first film S1 passes over idle guide rollers 20 and reaches a first pre-heating calender indicated as 21, from which it continues, and is wound around drum 2.

Here, at spreader unit 5, it is covered on one side with a thin layer of adhesive by applicator roller 22.

From a second reel, not shown in the figure, film S2 passes over a pre-heating calender 23 and is caused to adhere to film S1, previously spread with adhesive, by roller 9, which is part of spreader unit 3.

Film S3 approaches spreader unit 3 guided by a set of idle rollers, the last of which is indicated as 24 in figure 3.

Here, there are two possible alternative routes. The first route, in which film S3 is indicated by a continuous line, requires the film to pass over roller 24, then between rollers 8 and 9 of spreader unit 5, where it is covered with adhesive; finally, revolving around roller 9, it is applied to film S2 when that film is bonded to film S1 by roller 9.

The second alternative is to pass film S3 under roller 24, following the route indicated in the figure by a broken line, and then wind it round drum 2.

In this case roller 8 of unit 3 no longer transfers the adhesive to the film but passes it on to roller 9, which in turn spreads it on film S2 when the latter is bonded to film S1.

When film S3 is wound onto drum 2 it therefore adheres to film S2, which is already coated with adhesive.

The fourth film, S4, also reaches a pre-heating calender indicated as 25, and from there can follow two alternative routes.

The first route, indicated by a continuous line, requires film S4 to pass between rollers 26 and 27 of unit 4, where it is coated with adhesive by roller 26, on the surface which will subsequently adhere to layer S3 when film S4 is transferred to drum 2.

The second route, indicated by a broken line, requires film S4 to pass round roller 28 which presses it against drum 2, where it adheres to film 3. In this case roller 26 transfers the adhesive to roller 27 which spreads it on the surface of film S3, which originates from spreader unit 3.

The final four-ply film is consequently formed in the contact area between drum 2 and roller 28; the four layers are then pressed and joined together by roller 29, which presses on roller 28, pushed by pistons 30 (figure 2).

On exit from roller 29 the film, indicated as F, is conveyed to a rereeler not illustrated in the figure.

As a further alternative, instead of passing from pre-heating calender 21 to drum 2, film S1 could be conveyed directly to bonding, between rollers 28 and 29, as indicated by the broken line.

In this case it would be caused to adhere to film S2 after the latter has taken up the adhesive, which is spread directly on drum 2 by unit 5.

As will be seen, with the machine according to the invention it is possible to make a film consisting of four layers, which may be made of different materials, and to apply adhesive to either surface of the various layers, depending on which is most convenient according to the type of adhesive used and the working conditions.

The fact that each of units 3, 4 and 5 can slide on their guides enables the unit to be moved away from drum 2, for example when required to make a film with a smaller number of layers or when adhesive does not need to be applied between two layers, or to regulate the pressure with which the roller in contact with the drum compresses the film arriving from the upstream area.

The entire unit is moved away, for example, to make two bonded films, each consisting of two layers.

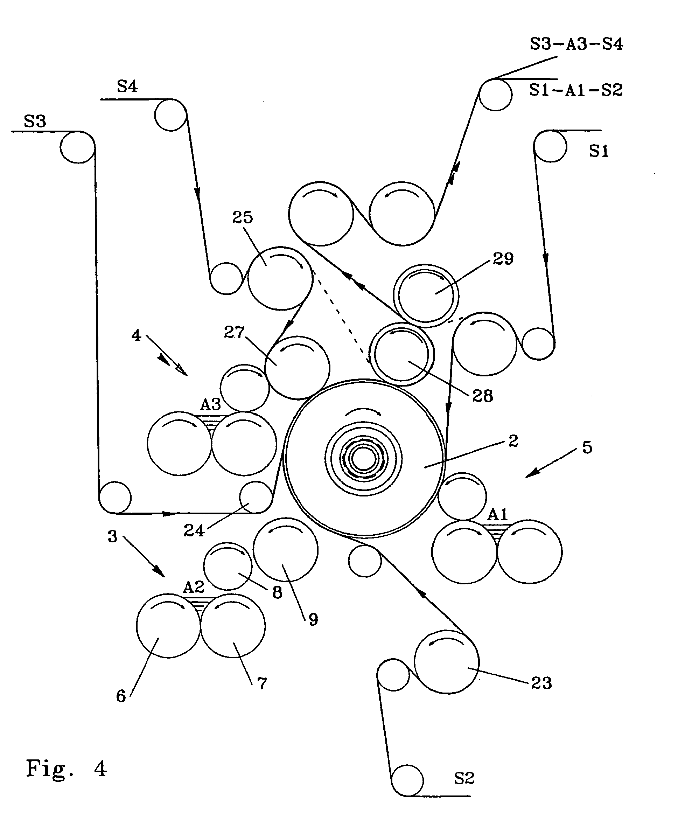

This situation is illustrated in figure 4.

Here, unit 3 is moved away from drum 2, so that unit 5 spreads the adhesive on film S1 which is bonded to film S2, while unit 4 spreads the adhesive on film S3 which is bonded to film S4.

The two pairs of film continue together on the drum and are then pressed by rollers 28 and 29, after which they are separated and conveyed to separate rereeling reels.

Spreader unit 3, being mounted on a carriage, can be easily removed and replaced by a pay-out device of known type, to feed an aluminium film destined to be bonded with one or two other films of different material.

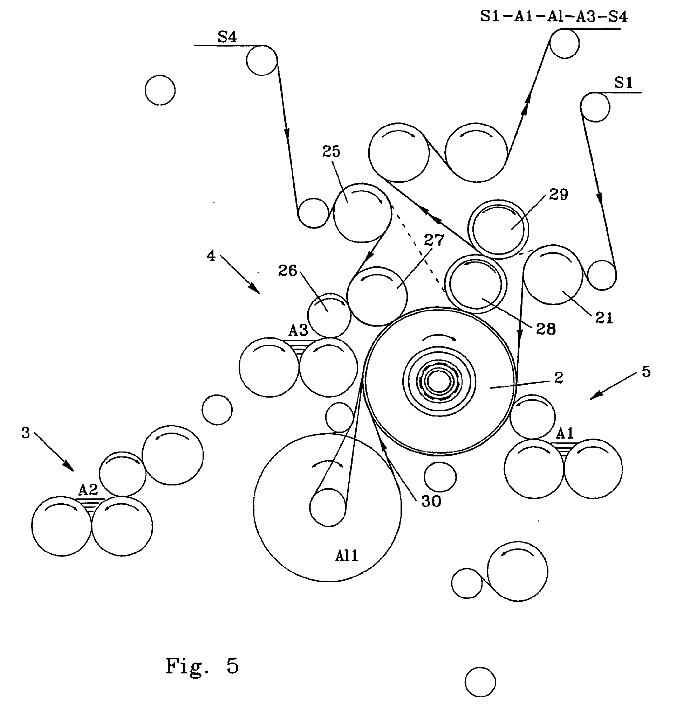

This situation is illustrated in figure 5, wherein Al1 indicates the pay-out reel that feeds aluminium foil, shown as 30.

In this embodiment, spreader unit 5 distributes adhesive on film S1, on which the aluminium foil is then laid; a second layer, consisting of film S4, is then spread with adhesive by spreader unit 4, and caused to adhere to the aluminium foil.

The result is a film that comprises an intermediate layer of aluminium sandwiched between two layers of different materials.

## Claims

1. Machine for bonding multiple layers of film made of different materials of the kind comprising means designed to feed a series of films to be bonded, spreading units (3, 4, 5) which can be operated separately from one other for applying a layer of adhesive to a film while moving and presser means (28, 29) fitted to press the films against one other for bonding said films, **characterised in that** it includes:
• an ordinary central drum (2) to which said films are directed, in succession, so that they slide along at least one section of the surface of said drum, said central drum (2) being associated with said set of spreader units (3,4,5) which can be operated separately from one other, each of which is designed to apply a layer of adhesive to a film while moving on or with said drum.

2. Film-bonding machine as claimed in claim 1, **characterised in that** said spreader units (3,4,5) include at least one roller (9,22,26) designed to distribute adhesive on one of the surfaces of a film, which said units are subject to the action of pressure means designed to press them against the drum with adjustable force.

3. Film-bonding machine as claimed in claim 2, **characterised in that** said spreader units (3,4,5) are mounted on slides (14) which enable them to be distanced from said drum.

4. Film-bonding machine as claimed in claim 3, **characterised in that** said spreader units (3,4,5) comprise a tank of adhesive, at least one take-up roller (7) designed to take up a layer of adhesive from said tank, and at least one transfer roller (9,22,26) designed to transfer the adhesive from said take-up roller to a film that runs along the surface of said drum.

5. Film-bonding machine as claimed in claim 4, wherein said transfer rollers (9,22,26) rotate at a higher speed than the upstream rollers in the same spreader unit, so as to distribute the adhesive in a thinner layer.

6. Film-bonding machine as claimed in any of claims 1 to 3, **characterised in that** it includes one or more presser rollers (28,29) designed to press the bonded films before they reach the rereeling devices.

7. Film-bonding machine as claimed in any of claims 1 to 3, **characterised in that** at least one (3) of said spreader units is removable, and can be replaced by an aluminium foil pay-out unit.

8. Machine as claimed in any of the preceding claims, **characterised in that** it includes four devices, each designed to feed one film, and three adhesive-spreading units.

9. Method for bonding multiple films, even of different materials, using solventless adhesive, wherein
• the film is guided to wind round an ordinary central drum (2) along which are arranged, in succession, a plurality of spreader units (3,4,5) which are designed to apply a layer of adhesive to the films and which, with said central drum, form the same number of adhesive application stations;
• adhesive is applied at each station to one surface of the film to be joined;
• at each station, a new film is glued to those below which are wound on the drum;
• the final film, consisting of layers of film bonded together by a layer of adhesive is then taken up.

10. Method as claimed in claim 9, wherein the first layer of adhesive is applied to the drum and transferred from the drum to the first film.

11. Method as claimed in claim 9, wherein one spreader unit (3) is removed or deactivated to obtain two films each constituted by two bonded layers.

12. Method as claimed in claim 9, wherein one spreader unit is replaced by an aluminium film pay-out device.

13. Method as claimed in claim 12, wherein the aluminium foil pay-out unit is positioned in one of the intermediate stations between the station at which the first film is introduced and the station at which the bonded film is picked up.

## Patentansprüche

1. Vorrichtung zum Verbinden mehrerer Folienschichten aus unterschiedlichen Materialien der Art bestehend aus Mitteln zum Zuführen einer Reihe von zu verbindenden Folien, Verteilereinheiten (3, 4, 5), die getrennt voneinander zum Auftragen von einer Klebstoffschicht auf eine in Bewegung befindliche Folie arbeiten können und aus geeigneten Druckmitteln (28, 29), um die Folien aneinander zu pressen zum Verbinden der genannten Folien, **dadurch gekennzeichnet, dass** sie folgendes umfasst:
• eine in der Mitte gelegene gewöhnliche Trommel (2), zu der genannte Folien nacheinander gelenkt werden, so dass sie mindestens entlang eines Abschnitts der Oberfläche der genannten Trommel abrollen, wobei genannte zentrale Trommel (2) mit dem Satz der Verteilereinheiten (3, 4, 5) verbunden ist, die in der Lage sind, getrennt voneinander zu arbeiten und jeweils dazu bestimmt sind, eine Klebstoffschicht an eine Folie aufzutragen, während diese sich auf oder mit genannter Trommel bewegt.

2. Vorrichtung zum Verbinden von Folien nach Anspruch 1, **dadurch gekennzeichnet, dass** genannte Verteilereinheiten (3, 4, 5) mindestens eine Walze (9, 22, 26) zum Verteilen des Klebstoffes auf eine der Folienoberflächen umfassen, wobei genannte Einheiten der Wirkung der Druckmitteln ausgesetzt sind, die derart ausgebildet sind, dass sie diese mit einstellbarer Kraft gegen die Trommel pressen.

3. Vorrichtung zum Verbinden von Folien nach Anspruch 2, **dadurch gekennzeichnet, dass** genannte Verteilereinheiten (3, 4, 5) auf Führungen (14) montiert sind, sodass sie von genannter Trommel distanziert sind.

4. Vorrichtung zum Verbinden von Folien nach Anspruch 3, **dadurch gekennzeichnet, dass** genannte Verteilereinheiten (3, 4, 5) aus einem Klebstoffbehälter, aus mindestens einer geeigneten Einsaugwalze (7) zum Aufnehmen einer Klebstoffschicht aus genanntem Behälter und ferner aus mindestens einer geeigneten Übertragungswalze (9, 22, 26) zum Übertragen des Klebstoffes von genannter Einsaugwalze zu einer Folie, die entlang der Oberfläche der genannten Trommel läuft, bestehen.

5. Vorrichtung zum Verbinden von Folien nach Anspruch 4, **dadurch gekennzeichnet, dass** genannte Übertragungswalzen (9, 22, 26) bei einer höheren Geschwindigkeit als die vorgelagerten Walzen in der gleichen Verteilereinheit rotieren, sodass der Klebstoff in einer dünneren Schicht verteilt wird.

6. Vorrichtung zum Verbinden von Folien nach einem der Ansprüche 1 bis 3, **dadurch gekennzeichnet, dass** sie eine oder mehrere geeignete Druckrollen (28, 29) zum Pressen der verbundenen Folien, bevor diese die Wiederaufrollvorrichtungen erreichen, umfasst.

7. Vorrichtung zum Verbinden von Folien nach einem der Ansprüche 1 bis 3, **dadurch gekennzeichnet, dass** mindestens eine (3) der genannten Verteilereinheiten entfernbar ist und durch eine Alufolien-Abrolleinheit ersetzt werden kann.

8. Vorrichtung nach einem der vorhergehenden Ansprüche, **dadurch gekennzeichnet, dass** sie vier Einheiten, die jeweils dazu bestimmt sind, eine Folie zu speisen, sowie drei Klebstoff-Verteilereinheiten umfasst.

9. Verfahren zum Verbinden von mehreren Folien auch aus unterschiedlichen Materialien unter Verwendung von lösungsmittelfreiem Klebstoff, worin
• die Folie geführt wird, sodass sie um eine zentral gelegene gewöhnliche Trommel (2) gewickelt wird, entlang der hintereinander eine Mehrzahl von Verteilereinheiten (3, 4, 5) angeordnet sind, die derart ausgebildet sind, dass sie eine Klebstoffschicht auf die Folie auftragen und die mit genannter zentraler Trommel die gleiche Anzahl an Klebstoffanbringstationen bilden;
• der Klebstoff an jeder Station an eine Oberfläche der zu verbindenden Folie aufgetragen wird;
• an jeder Station eine neue Folie an die unteren angeklebt wird, die um die Trommel gewickelt sind;
• die Endfolie, bestehend aus den Schichten der durch eine Klebstoffschicht zusammen gebundenen Folie, dann abgenommen wird.

10. Verfahren nach Anspruch 9, worin die erste Klebstoffschicht auf die Trommel aufgetragen und dann von der Trommel zur ersten Folie weitergeleitet wird.

11. Verfahren nach Anspruch 9, worin eine Verteilereinheit (3) entfernt oder ausgeschaltet werden kann, um zwei Folien zu erhalten, die jeweils aus zwei verbundenen Schichten geformt sind.

12. Verfahren nach Anspruch 9, worin eine Verteilereinheit durch eine Alufolien-Abrolleinheit ersetzt wird.

13. Verfahren nach Anspruch 12, worin die Alufolien-Abrolleinheit in einer der Zwischenstationen zwischen der Station, an der die erste Folie eingeführt wird und der Station, an der die verbundene Folie abgenommen wird, positioniert ist.

## Revendications

1. Un appareil à laminer de multiples couches de film faites en différentes matières de la sorte comprenant un instrument conçu pour alimenter une série de films à encoller, des unités enduiseuses (3, 4, 5) qui peuvent fonctionner séparément l'une de l'autre pour appliquer une couche d'adhésif à un film qui se déplace et un instrument de pression (28, 29) adapté à presser les films les uns contre les autres pour encoller lesdits films, **caractérisé par le fait qu'**il comprend :
• un tambour central ordinaire (2) vers lequel lesdits films sont dirigés, en succession, de sorte qu'ils glissent le long au moins d'une section de la surface du dit tambour, ledit tambour central (2) étant associé à ladite série d'unités enduiseuses (3, 4, 5) qui peuvent fonctionner séparément les unes des autres, chacune d'elles étant conçue pour appliquer une couche d'adhésif à un film qui se déplace sur ou avec ledit tambour.

2. Un appareil à laminer les films conformément à la revendication 1, **caractérisé par le fait que** lesdites unités enduiseuses (3, 4, 5) comprennent au moins un rouleau (9, 22, 26) conçu pour répandre l'adhésif sur une des surfaces d'un film, que lesdites unités sont sujettes à l'action de pression d'un appareil conçu pour les presser contre le tambour avec une force ajustable.

3. Un appareil à laminer les films conformément à la revendication 2, **caractérisé par le fait que** lesdites unités enduiseuses (3, 4, 5) sont montées sur des coulisseaux (14) qui leur permettent de rester à distance dudit tambour.

4. Un appareil à laminer les films conformément à la revendication 3, **caractérisé par le fait que** lesdites unités enduiseuses (3, 4, 5) comprennent un réservoir d'adhésif, au moins un enrouloir (7) conçu pour prélever une couche d'adhésif du dit réservoir, et au moins un rouleau preneur (9, 22, 26) conçu pour transférer l'adhésif du dit enrouloir à un film qui se déplace sur la surface du dit tambour.

5. Un appareil à laminer les films conformément à la revendication 4, dans lequel lesdits rouleaux preneurs (9, 22, 26) tournent à une vitesse supérieure à celle des rouleaux en amont dans la même unité enduiseuse, afin de distribuer l'adhésif en une coucher plus fine.

6. Un appareil à laminer les films selon n'importe quelle des revendications de 1 à 3, **caractérisé par le fait qu'**il comprend un ou plusieurs rouleaux presseurs (28, 29) conçus pour presser les films laminés avant qu'ils n'arrivent aux appareils rebobineurs.

7. Un appareil à laminer les films selon n'importe quelle revendication de 1 à 3, **caractérisé par le fait qu'**au moins une (3) des dites unités enduiseuses est amovible, et peut être remplacée par une unité dévidoir de feuille d'aluminium.

8. Un appareil à laminer les films selon n'importe quelle des revendications qui précèdent **caractérisé par le fait qu'**il inclut quatre dispositifs, chacun conçu pour alimenter un film, et trois unités enduiseuses d'adhésif.

9. Méthode pour laminer les films multiples, même de différentes matières, en utilisant des adhésifs sans solvant, selon laquelle
• le film est guidé pour s'enrouler autour d'un tambour central ordinaire (2) le long duquel sont arrangées, en succession, plusieurs unités enduiseuses (3, 4, 5) qui sont conçues pour appliquer une couche d'adhésif aux films et qui, avec ledit tambour central, forment le même nombre de stations d'application d'adhésif ;
• l'adhésif est appliqué à chaque station sur une surface du film à encoller ;
• à chaque station, un nouveau film est collé aux films sous-jacents qui sont enroulés sur le tambour ;
• le film final, composé de couches de film encollées ensemble par une couche d'adhésif est ensuite enroulé.

10. Méthode selon la revendication 9, dans laquelle la première couche d'adhésif est appliquée au tambour et transférée du tambour au premier film.

11. Méthode selon la revendication 9, dans laquelle une unité enduiseuse (3) est retirée ou désactivée pour obtenir deux films, chacun constitué de deux couches encollées.

12. Méthode selon la revendication 9, dans laquelle une unité enduiseuse est remplacée par un dévidoir de feuille aluminium.

13. Méthode selon la revendication 12, dans laquelle le dévidoir de feuille aluminium est placé dans une des stations intermédiaires entre la station à laquelle le premier film est introduit et la station à laquelle le film laminé est prélevé.
